# EUROPEAN PATENT APPLICATION

(11) **EP 3 148 167 A1**
(43) Date of publication of application: **29.03.2017**
(21) Application number: 14892806.2
(22) Date of filing: 20.08.2014
(51) Int. Cl.: H04M 1/725, H02H 5/04

(54) **POWER SUPPLY PROTECTION APPARATUS AND TERMINAL DEVICE**

(30) Priority: 22.05.2014 CN 201410219155
(71) Applicant: ZTE Corporation, Shenzhen, Guangdong 518057 (CN)
(72) Inventor: FENG, Qiang, Shenzhen Guangdong 518057 (CN); YUAN, Ming, Shenzhen Guangdong 518057 (CN); LU, Guoqiang, Shenzhen Guangdong 518057 (CN); CAO, Fei, Shenzhen Guangdong 518057 (CN)
(74) Representative: Potter Clarkson LLP
(86) International application number: PCT/CN2014/084858
(87) International publication number: WO 2015/176407

(57) **Abstract**

Disclosed are a power supply protection apparatus and a terminal device. The power supply protection apparatus comprises: a power supply module, configured to supply power to various electrical modules; a subscriber identity module (SIM) card interface module, configured to allow access of a SIM card; and a hot-swapping protection module, disposed between the power supply module and the SIM card interface module and configured to limit the current when a short-circuit occurs. By means of the present invention, hot-swapping of the SIM can be implemented through the hot-swapping protection module, and a fault such as system resetting does not occur even if a short-circuit between the VCC and GND is caused by the SIM card, thereby effectively protecting the system. The method has the advantages of simple structure and low cost.

## Description

### TECHNICAL FIELD

The present disclosure generally relates to technical field of communication, and more particularly, to a power supply protection apparatus and a terminal device.

### BACKGROUND

A SIM(Subscriber Identity Module) card is also named a smart card or a subscriber identity card. At present, the set-card separation technology is introduced into the PON(Passive Optical Network) terminal, in which the information of a user is stored in a SIM card, the terminal could only be used as an internal LAN(Local Area Network) gateway device before the smart card is inserted, and only by inserting the smart card into a corresponding card slot could the device be unlocked so as to achieve the function of accessing a MAN(metropolitan area network).

The SIM card standard has defined signals and the positions of contacts but has not explicitly defined the size of the contacts, resulting in the market variety of SIM PINs, wherein the GND PIN of some sorts of cards is relatively long and even longer than the distance between two contacts, which leads to a short-circuit between a GND and a VCC or a short-circuit between a signal line and a GND and further influence the normal function of the system. Moreover, faults such as the reset and burnout of a single board might be caused. So it's necessary to protect the power supply of a system.

As the SIM card slot of a PON terminal is not concealed internally in the box but can be inserted and extracted at any time, and moreover, a PON terminal device is generally installed in a user's home and the user can operate the SIM card on his will with which it cannot be guaranteed that all users would operate the SIM card with power off, so a hot-swapping protection function of the SIM card is necessary to be considered.

A typical hot-swapping protection circuit includes a current detection resister, a MOS(Metal Oxide Semiconductor) transistor, a current detection amplifier, a comparator and the like, wherein the current detection resister monitors the current and detects the voltage drop of a resister which would then be amplified and inputted to the comparator and be compared with a given voltage value, then a signal is outputted to control the on or off of the MOS transistor. This method is complicated to realize and of high cost.

### SUMMARY

The present disclosure is directed to provide a power supply protection apparatus and a terminal device with a simple structure.

In order to overcome the problems existing in the related art, in one aspect, the present disclosure provides a power supply protection apparatus including: a power supply module configured to supply power to various power consuming modules; a subscriber identity module (SIM) card interface module configured to allow access of a SIM card; a hot-swapping protection module provided between the power supply module and the SIM card interface module and configured to limit the current when a short-circuit occurs.

In an embodiment, said apparatus further includes:
a control module configured to, when the SIM card interface module determines that the SIM card is inserted, control the hot-swapping protection to switch on a power supply circuit between the power supply module and the SIM card interface module, and when the SIM card interface module determines that the SIM card is pulled out, control the hot-swapping protection module to switch off the power supply circuit between the power supply module and the SIM card interface module.

In an embodiment, the hot-swapping protection module includes:
a positive temperature coefficient thermistor configured to limit the current when a short-circuit occurs; and a switching circuit configured to switch on or switch off the power supply circuit between the power supply circuit and the SIM card interface module.

In an embodiment, the positive temperature coefficient thermistor is connected to the switching circuit in series.

In an embodiment, the positive temperature coefficient thermistor is provided between the switching circuit and the power supply, or provided between the switching circuit and the SIM card interface module.

In another aspect, the present disclosure also provides a terminal device, provided with a power supply protection apparatus performing short-circuit protection of a power supply, wherein the power supply protection apparatus includes: a power supply module configured to supply power to various power consuming modules; a subscriber identity module (SIM) card interface module configured to allow access of a SIM card; and a hot-swapping protection module provided between the power supply module and the SIM card interface module and configured to limit the current when a short-circuit occurs.

In an embodiment, said apparatus includes: a control module configured to, when the SIM card interface module determines that the SIM card is inserted, control the hot-swapping protection to switch on a power supply circuit between the power supply module and the SIM card interface module; and when the SIM card interface module determines that the SIM card is pulled out, control the hot-swapping protection module to switch off the power supply circuit between the power supply module and the SIM card interface module.

In an embodiment, the hot-swapping protection module includes: a positive temperature coefficient thermistor configured to limit the current when a short-circuit occurs; and a switching circuit configured to switch on or switch off the power supply circuit between the power supply circuit and the SIM card interface module.
Alternatively, the positive temperature coefficient thermistor is connected to the switching circuit in series.

In an embodiment, the positive temperature coefficient thermistor is provided between the switching circuit and the power supply, or provided between the switching circuit and the SIM card interface module.

The present disclosure has beneficial effects as follows. By means of the hot-swapping protection module can the hot-swapping be achieved, and the faults such as system reset would not be caused even if the short-circuit of VCC or GND occurs in the SIM card, with which the system could be effectively protected. This method has the advantages of simple structure, low cost and the like.

### BRIEF DESCRIPTION OF THE DRAWINGS

Fig. 1 is a block diagram illustrating a power supply protection apparatus according to an exemplary embodiment of the present disclosure.
Fig. 2 is a block diagram illustrating another power supply protection apparatus according to an exemplary embodiment of the present disclosure.

### DETAILED DESCRIPTION

The following description is to explain the disclosure in detail according to the accompanying drawings and the exemplary embodiments. It will be appreciated that the present disclosure is not limited to the exact construction that has been described above.

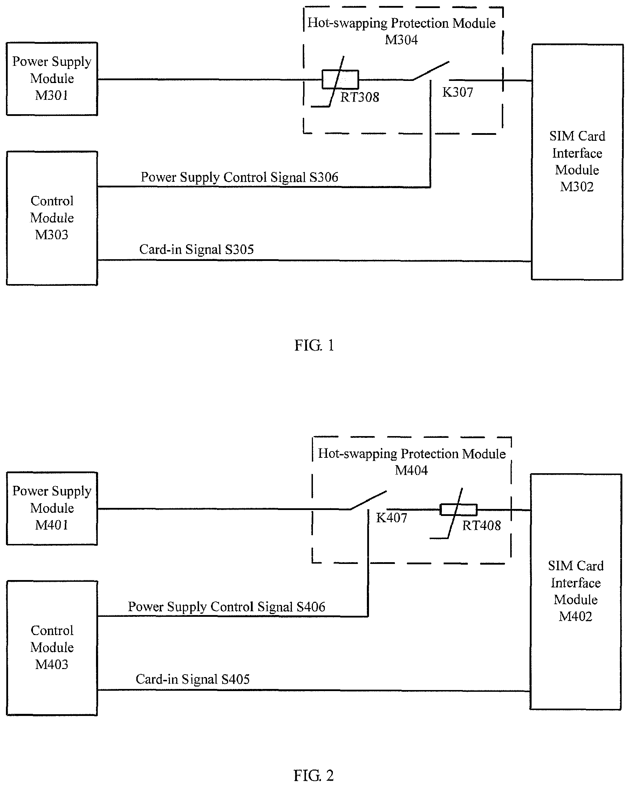

As shown in Fig. 1, an exemplary embodiment of the invention involves a power supply protection apparatus, including:
a power supply module M301 configured to supply power to various power consuming modules;
a subscriber identity module (SIM) card interface module M302 configured to allow access of a SIM card; and
a hot-swapping protection module M304 provided between the power supply module and the SIM card interface module and configured to limit the current when a short-circuit occurs.

The hot-swapping protection module M304 includes a switching circuit and a current limiting protection circuit. The switching circuit is shown as K307 in the drawing, and RT308 in the drawing is a positive temperature coefficient thermistor, i.e. the current limiting protection circuit. The positive temperature coefficient thermistor (PTC) is a semiconductor resistor with temperature sensibility which means its resistance value will rise as the temperature rises. The temperature variation of the PTC thermistor can be reflected by the current flowing through the PTC thermistor.

The apparatus further includes: a control module M303 configured to, when the SIM card interface module M302 determines that the SIM card is inserted, control the hot-swapping protection M304 to switch on a power supply circuit between the power supply module M301 and the SIM card interface module M302, and when the SIM card interface module M302 determines that the SIM card is pulled out, control the hot-swapping protection module M304 to switch off the power supply circuit between the power supply module M301 and the SIM card interface module M302.

The SIM card interface module M302 includes a SIM card connector, which will cause a change in the card-in signal level when the SIM card is being inserted or extracted and which inputs the card-in signal S305 to the control module M303. The difference in the card-in signal level can indicate whether there is a card or not. The SIM card connector is provided thereon with a switch which will be triggered when inserting or extracting the SIM card, resulting in a change in the card-in signal level.

In the present embodiment, one end of the positive temperature coefficient thermistor RT308 is connected to the power supply module M301, and the other end is connected to the input end of the switching circuit K307. The output end of the switching circuit K307 is connected to the SIM card interface module M302. The control module M303 controls the switching on or switching off of the switching circuit K307 by sending a power supply control signal S306 to the switching circuit K307.In an embodiment, the switching circuit K307 can control its switching on or switching off through GPIO (General Purpose Input Output) of the control module, where the circuit is switched on when inserting a card is detected and switched off when extracting a card is detected. The SIM card interface module M302 may send a card-in signal S305 to the control module M303 when a SIM card is inserted into the SIM card interface module M302. The control module M303 controls the switching circuit K307 to switch on when detecting the card-in signal S305 indicates that there is a card, and starts to supply power to the SIM card interface module M302. The SIM card interface module M302 may send a card-in signal S305 to the control module M303 when the SIM card is extracted out of the SIM card interface module M302. The control module M303 controls the switching circuit K307 to switch off when detecting the card-in signal S305 indicates that there is no card, and stops supplying power to the M302.

In an embodiment, during the procedure of inserting and extracting a SIM card, the resistance value of the positive temperature coefficient thermistor RT308 rises due to the short-circuit current passing through when the supplying power has started and the short-circuit continues, and thus limits magnitude of the current and protects the system and the SIM card. In the present embodiment, the positive temperature coefficient thermistor RT308 is provided prior to the switching circuit K307. In other words, the positive temperature coefficient thermistor is disposed between the switching circuit and the power supply module, and limits the input current.

The power supply module M301 supplies the power the SIM card needs, and the power can be acquired from the power supply of the system where the apparatus is provided, or can be acquired after being converted independently by a power supply chip.

Fig. 2 illustrates another embodiment of the power supply protection apparatus of the present disclosure. The hot-swapping protection module M404 includes RT408 and K407 shown in the drawing, where RT408 is a current limiting protection circuit, and K407 is a switching circuit. In the present embodiment, the positive temperature coefficient thermistor RT408 is provided subsequent to the switching circuit K407. In other words, the positive temperature coefficient thermistor RT408 is provided between the switching circuit and the SIM card interface module M402, limiting the output current as well as protecting the system and the SIM card.

In the present embodiment, one end of the switching circuit K407 is connected to the power supply module M401, the power supply control signal S406 of the switching circuit K407 is connected to the control module M403, the other end of the switching circuit is connected to the positive temperature coefficient thermistor RT408, the other end of the positive temperature coefficient thermistor is connected to the SIM card interface module M402, and the card-in signal S405 is inputted to the power supply module M401.

The control module M403 controls the switching circuit K407 to switch on and starts to supply power to the SIM card interface module M402 when detecting the card-in signal S305 indicates that there is a card. The control module M403 controls the switching circuit K407 to switch off and stops supplying power to M402 when detecting the card-in signal S405 indicates that there is no card.

During the procedure of inserting and extracting a SIM card, the resistance value of the positive temperature coefficient thermistor RT408 rises due to the short-circuit current passing through when the supplying power has started and the short-circuit continues, and thus limits magnitude of the current and protects the system and the SIM card.

In the present disclosure, protection can be achieved by means of the switching circuit and the positive temperature coefficient thermistor. Such a solution is of a simple structure and saves space for PCB (Printed Circuit Board). Furthermore, there is provided a function of short-circuit protection by the disclosure, which brings about obvious advantages in a terminal device.

In addition, the present invention involves a terminal device which protects the power circuit through a power supply protection apparatus. The power supply protection apparatus of the terminal device can be implemented by the power supply protection apparatus described in the embodiments above. The structure and function of the power supply protection apparatus are already described in details in the embodiments above, and thus will not be elaborated herein.

It's clear from the descriptions above, the embodiments of the present invention refer to a PON terminal device supporting hot-swapping of a SIM card which can efficiently prevent power supply faults and protect the SIM card at the same time owning to the hot-swapping protection module. The PON terminal device can meet the demands of hot-swapping of the SIM card and thus is of widespread application scenarios and practical value. The SIM card may be also required by other sorts of terminal devices with the development of the set-card separation technology. Therefore, the concept and implementation of the present disclosure are not limited to the PON terminal, but also can be applied to other terminal devices, such as a xDSL device and the like. The xDSL may be referred to as all sorts of DSL (Digital Subscriber Line), including ADSL, RADSL, VDSL, SDSL, IDSL, HDSL and the like.

Despite that embodiments of the disclosure have been disclosed exemplarily, various modifications, additions and changes are still possible for those skilled in the art. So the scope of the disclosure is not limited to the embodiments above.

### INDUSTRIAL APPLICABILITY

As described above, the hot-swapping of a SIM card can be achieved by means of the embodiments and implementations described above, i.e. through the hot-swapping protection module. Accordingly, the faults such as system reset would not be caused even if the short-circuit of VCC or GND occurs due to the SIM card, such that the system could be effectively protected. This method has the advantages of simple structure, low cost and the like.

## Claims

1. A power supply protection apparatus, comprising:
a power supply module configured to supply power to power consuming modules;
a subscriber identity module SIM card interface module configured to allow access of a SIM card; and
a hot-swapping protection module provided between the power supply module and the SIM card interface module and configured to limit the current when a short-circuit occurs.

2. The power supply protection apparatus of claim 1, wherein said apparatus further comprises:
a control module configured to,
when the SIM card interface module determines that the SIM card is inserted, control the hot-swapping protection to switch on a power supply circuit between the power supply module and the SIM card interface module, and
when the SIM card interface module determines that the SIM card is pulled out, control the hot-swapping protection module to switch off the power supply circuit between the power supply module and the SIM card interface module.

3. The power supply protection apparatus of claim 1 or 2, wherein the hot-swapping protection module comprises:
a positive temperature coefficient thermistor configured to limit the current when a short-circuit occurs; and
a switching circuit configured to switch on or switch off the power supply circuit between the power supply module and the SIM card interface module.

4. The power supply protection apparatus of claim 3, wherein the positive temperature coefficient thermistor is connected to the switching circuit in series.

5. The power supply protection apparatus of claim 4, wherein the positive temperature coefficient thermistor is provided between the switching circuit and the power supply module, or provided between the switching circuit and the SIM card interface module.

6. A terminal device, provided with a power supply protection apparatus performing short-circuit protection of a power supply, wherein the power supply protection apparatus comprises:
a power supply module configured to supply power to power consuming modules;
a subscriber identity module SIM card interface module configured to allow access of a SIM card; and
a hot-swapping protection module provided between the power supply module and the SIM card interface module and configured to limit the current when a short-circuit occurs.

7. The terminal device of claim 6, wherein said apparatus further comprises:
a control module configured to,
when the SIM card interface module determines that the SIM card is inserted, control the hot-swapping protection to switch on a power supply circuit between the power supply module and the SIM card interface module; and
when the SIM card interface module determines that the SIM card is pulled out, control the hot-swapping protection module to switch off the power supply circuit between the power supply module and the SIM card interface module.

8. The terminal device of claim 6 or 7, wherein the hot-swapping protection module comprises:
a positive temperature coefficient thermistor configured to limit the current when a short-circuit occurs; and
a switching circuit configured to switch on or switch off the power supply circuit between the power supply module and the SIM card interface module.

9. The terminal device of claim 8, wherein the positive temperature coefficient thermistor is connected to the switching circuit in series.

10. The terminal device of claim 9, wherein the positive temperature coefficient thermistor is provided between the switching circuit and the power supply module, or provided between the switching circuit and the SIM card interface module.
